(19) Europäisches Patentamt / European Patent Office / Office européen des brevets

(11) **EP 4 320 613 B1**

(12) **FASCICULE DE BREVET EUROPEEN**

(45) Date de publication et mention
de la délivrance du brevet:
**17.09.2025   Bulletin 2025/38**

(21) Numéro de dépôt: **22720717.2**

(22) Date de dépôt: **05.04.2022**

(51) Classification Internationale des Brevets (IPC):
*G10K 11/16* (2006.01)      *F04D 29/66* (2006.01)
*F16D 55/00* (2006.01)      *F16D 65/00* (2006.01)
*G10K 11/172* (2006.01)     *B60T 17/00* (2006.01)
*B60T 17/02* (2006.01)      *F04D 13/06* (2006.01)
*F04D 29/42* (2006.01)

(52) Classification Coopérative des Brevets (CPC):
**G10K 11/161; B60T 17/008; B60T 17/02;
F04D 13/06; F04D 29/426; F04D 29/669;
G10K 11/172;** F05D 2260/963

(86) Numéro de dépôt international:
**PCT/EP2022/059032**

(87) Numéro de publication internationale:
**WO 2022/214500 (13.10.2022 Gazette 2022/41)**

(54) **ATTÉNUATEUR DU BRUIT GÉNÉRÉ PAR UNE POMPE CENTRIFUGE**

GERÄUSCHDÄMPFER ZUR DÄMPFUNG VON EINER ZENTRIFUGALPUMPE ERZEUGTEN GERÄUSCHE

NOISE  DAMPER FOR ATTENUATING NOISE GENERATED BY A CENTRIFUGAL PUMP

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **08.04.2021   FR 2103612**

(43) Date de publication de la demande:
**14.02.2024   Bulletin 2024/07**

(73) Titulaires:
• **Tallano Technologies
75015 Paris (FR)**

• **AKWEL
01410 Champfromier (FR)**

(72) Inventeur: **GUERRY, Pascal
68580 Seppois-le-Haut (FR)**

(74) Mandataire: **Plasseraud IP
104 Rue de Richelieu
CS92104
75080 Paris Cedex 02 (FR)**

(56) Documents cités:
**CN-U- 203 570 691      FR-A1- 2 894 645
US-A- 3 144 913**

**EP 4 320 613 B1**

**Description**

La présente invention concerne un atténuateur de bruit, en particulier de bruits générés par une turbine d'une pompe centrifuge. Elle s'applique plus particulièrement mais non spécifiquement à un dispositif de récupération de particules de poussières de freinage, en particulier émises lors d'une action de freinage d'un véhicule automobile dont l'air est aspiré au moyen d'une telle pompe centrifuge. Le domaine d'application de l'invention concerne plus particulièrement mais non exclusivement la récupération des poussières de freinage générées lors d'une action de freinage d'un véhicule, qu'il soit routier (par exemple : automobile, poids lourd, motocyclette) ou ferroviaire (train, tramway métro).

De manière générale, le freinage d'un véhicule ferroviaire ou routier, et en particulier d'un véhicule automobile, est réalisé par un système de freinage à friction, comme c'est le cas par exemple des « freins à disque ». L'invention peut s'appliquer à d'autres types de systèmes de freinage, tels que les freins à tambour ou tout autre type de frein à friction. Un frein à disque comprend un disque tournant autour d'un axe fixé sur un moyeu d'une roue du véhicule et des plaquettes de frein pourvues de garnitures réalisées en matériau de friction et montées de part et d'autre du disque par l'intermédiaire d'un étrier de frein.

Lors d'une action de freinage, les plaquettes de frein mobiles par rapport à l'étrier viennent en appui sur les disques liés en rotation aux roues du véhicules, afin d'appliquer dessus un couple de freinage et permettre le freinage par conversion de l'énergie cinétique en chaleur.

Or, à chaque action de freinage, le frottement des plaquettes de frein produit, en plus du dégagement de chaleur, une usure des matériaux de friction des garnitures, ainsi qu'une usure des disques ou des tambours métalliques. Cette usure par abrasion produit une émission de particules importante. Les freins d'un véhicule automobile n'étant généralement pas complètement fermés, ces particules de poussière de freinage viennent alors directement se disperser dans le milieu ambiant.

Outre le fait d'être salissantes pour l'environnement immédiat des roues et notamment des jantes, ces particules sont surtout nocives pour la santé. En effet, ces particules peuvent être des nanoparticules ou des microparticules, les particules les plus fines étant reconnues comme étant particulièrement nocives pour la santé des individus en général, avec notamment un risque accru de développer des maladies respiratoires, allergiques et cardio-vasculaires.

Afin de réduire la pollution aux particules de poussière de freinage, il est connu de l'état de la technique de disposer à proximité du système de freinage un dispositif de filtration des particules.

Un tel dispositif de filtration comprend un boîtier délimitant un corps de collecte et logeant par exemple un organe de filtration tel qu'un filtre à particules et/ou une structure cyclonique, le boîtier comprenant une entrée de flux d'air sale et une sortie de flux d'air purifié, la circulation de l'air s'effectuant entre l'entrée et la sortie au travers du filtre et/ou de la structure cyclonique.

Afin de provoquer la circulation d'air à l'intérieur du boîtier, il est connu de l'art antérieur de raccorder la sortie du boîtier à une « turbine », qui est la désignation communément utilisée pour désigner une pompe centrifuge.

Une telle pompe se présente généralement de façon connue en soi sous la forme d'un corps de pompe en forme de volute logeant une hélice rotative qui vient aspirer axialement dans la pompe, accélérer radialement et enfin refouler tangentiellement l'air purifié sortant du boîtier après filtration.

De cette façon, la poussière générée par le frottement entre la garniture de frein et la roue pendant le freinage est captée et filtrée dans le dispositif de filtration. En effet, au moyen de la pompe centrifuge d'aspiration, un flux d'air portant de la poussière est aspiré dans le boîtier de filtration. Le flux d'air est purifié au travers du ou des organes de filtration avant d'arriver à la pompe centrifuge qui va le refouler vers l'extérieur.

Toutefois, le dispositif de filtration avec pompe centrifuge présente l'inconvénient d'être une source de nuisance sonore importante, sur une plage de fréquences sonores potentiellement indésirables et dont peuvent se plaindre les utilisateurs des véhicules automobiles.

Le document US 3 144 913, par exemple, divulgue un tel dispositif d'atténuation acoustique pour un dispositif électromécanique parcouru par un flux gazeux susceptible de propager des ondes acoustiques.

L'invention a notamment pour but de remédier à cet inconvénient en permettant de réduire le bruit issu du fonctionnement de la pompe centrifuge avec un encombrement minimal et une plage d'amortissement des fréquences sonores importante.

A cet effet, l'invention a pour objet un dispositif d'atténuation acoustique pour un dispositif électromécanique parcouru par un flux gazeux susceptible de propager des ondes acoustiques, comprenant des orifices d'entrée et de sortie d'un flux gazeux, en particulier en vue d'une évacuation dans l'atmosphère, caractérisé en ce que le dispositif comprend un canal de forme générale globalement curviligne autour d'un axe principal du dispositif définissant un trajet d'écoulement du flux gazeux sensiblement curviligne entre les orifices d'entrée et de sortie, et comprend une pluralité d'éléments atténuateurs acoustiques accordés sur une fréquence de résonance d'atténuation, disposés consécutivement en série le long dudit canal de façon à être en interaction avec le flux gazeux s'écoulant dans le canal, les éléments atténuateurs acoustiques étant formés par des cavités de résonateurs quart d'onde.

Grâce à cette disposition curviligne autour de l'axe principal des résonateurs dans le canal d'atténuation acoustique, le dispositif d'atténuation acoustique est peu encombrant car il peut être aisément installé à l'intérieur d'un corps de pompe centrifuge. En particulier, grâce à l'invention, il est possible d'agencer une pluralité de résonateurs dans un espace réduit tout en permettant une atténuation des fréquences sonores sur une plage de fréquences élargie.

Dans un mode de réalisation préféré, le canal a une forme générale globalement annulaire autour de l'axe définissant un trajet d'écoulement quasi-circulaire entre les orifices d'entrée et de sortie.

Dans un mode de réalisation préféré, le canal s'enroule au moins partiellement selon une configuration en spirale se développant vers l'extérieur entre l'orifice d'entrée et l'orifice de sortie.

Dans un mode de réalisation préféré, le canal est pourvu d'une structure géométrique interne s'étendant à l'intérieur du canal selon une direction sensiblement circonférentielle, configurée pour délimiter la pluralité de cavités et laisser libre de parcours un passage principal d'écoulement du flux gazeux à l'intérieur duquel les cavités débouchent.

Dans un mode de réalisation préféré, la structure géométrique interne comprend une pluralité de cloisons de séparation radiale délimitant avec des parois du canal une pluralité de compartiments formant la pluralité de cavités.

Selon l'invention, une paroi du canal présente un profil en gradin définissant une profondeur incrémentale variable d'une cavité à l'autre selon une direction circonférentielle du canal.

Dans un mode de réalisation préféré, la profondeur d'une cavité à l'autre varie de façon croissante ou décroissante sur la série des résonateurs dans le sens allant de l'entrée vers la sortie.

Dans un mode de réalisation préféré, au moins des premier et deuxième résonateurs ayant des première et deuxième fréquences de résonance associées respectivement à des première et deuxième bandes fréquentielles d'atténuation supérieure à vingt décibels, la distance circonférentielle entre les deux résonateurs est déterminé pour produire un phénomène de couplage des deux résonateurs sur une bande fréquentielle continue d'atténuation supérieure à vingt décibels.

Par distance circonférentielle, on entendra la distance séparant deux éléments suivant une ligne médiane circonférentielle du canal.

Dans un mode de réalisation préféré, un pas optimal Popt(i) entre deux résonateurs consécutifs Ai et Ai+1 étant donné par la formule suivante :

$$\text{Popt(i)} = \frac{v}{8} \times \left( \frac{1}{f0_i} + \frac{1}{f0_{i+1}} \right)$$

dans laquelle f0(i) est la fréquence de résonance du résonateur Ai, fo(i+1) est la fréquence de résonance du résonateur Ai+1 et v la vitesse du son, le pas P(i) entre deux résonateurs consécutifs Ai et Ai+1 est compris dans une plage de valeurs allant de 50% à 150 % de la valeur de Popt(i).

Dans un mode de réalisation préféré, le pas entre deux résonateurs varie de façon croissante ou décroissante le long de la série des résonateurs dans le sens allant de l'entrée vers la sortie.

Dans un mode de réalisation préféré, le pas entre deux résonateurs consécutifs Ai et Ai+1 est constant le long de la série des résonateurs et correspond à la valeur moyenne des valeurs minimale et maximale du pas optimal Popt(i) sur la série des résonateurs Ai avec i allant de 1 à N.

Dans un mode de réalisation préféré, les résonateurs sont tous dimensionnellement différents deux à deux afin d'assurer une absorption à une fréquence de résonance différente.

Dans un mode de réalisation préféré, la cavité de chaque résonateur a une forme sensiblement tubulaire configurée pour déboucher à l'intérieur du canal et a une profondeur correspondant sensiblement à un quart de la longueur d'onde de l'onde acoustique de fréquence de résonance prédéfinie.

Dans un mode de réalisation préféré, la section transversale de chaque cavité de résonateur présente des bords curvilignes suivant des courbures intérieure et extérieure du canal.

Dans un mode de réalisation préféré, le canal est délimité radialement par des parois périphériques extérieure et intérieure annulaires autour de l'axe, et transversalement par des parois supérieure et inférieure.

Dans un mode de réalisation préféré, la paroi supérieure est configurée pour délimiter axialement la profondeur des cavités de résonance formant les résonateurs.

L'invention a encore pour objet une pompe centrifuge, comprenant un carter, un arbre s'étendant selon un axe principal de la pompe, une roue montée sur l'arbre, un moteur d'entraînement en rotation de la roue, définissant un trajet d'écoulement d'un flux gazeux à l'intérieur du carter de la pompe entre un orifice d'admission et un orifice de refoulement du flux gazeux, caractérisé en ce qu'il comprend un dispositif d'atténuation acoustique selon l'invention, le canal d'atténuation acoustique étant disposé selon une configuration curviligne autour de l'axe principal de la pompe à l'intérieur du carter de telle sorte que le flux gazeux circulant dans la pompe s'écoule au travers dudit canal d'atténuation avant son refoulement dans l'atmosphère par l'orifice de refoulement du carter aval.

Dans un autre mode de réalisation, le carter comprend un carter amont configuré pour loger la roue et un carter aval configuré pour loger le moteur, le carter aval comprenant un corps en forme générale de capot délimitant une paroi périphérique extérieure et une paroi périphérique intérieure s'étendant autour d'un espace central de logement du moteur, le canal du dispositif d'atténuation s'étendant entre les deux parois extérieure et intérieure du carter aval.

L'invention a enfin un dispositif dépolluant de récupération de particules de poussière de freinage, en particulier produites par une ou des plaquettes d'un agencement de frein d'un véhicule automobile, le dispositif comprenant un boîtier avec un orifice d'entrée pour un flux d'air sale chargé en particules et un orifice de sortie pour l'évacuation d'un flux d'air purifié, et au moins un organe de séparation, logé dans le boîtier, pour séparer des particules du flux d'air sale, au travers duquel le flux d'air circule entre les orifices d'entrée et de sortie, caractérisé en ce que le dispositif comprend un organe d'aspiration comprenant une pompe centrifuge selon l'invention et en ce que l'orifice d'admission est configuré pour être raccordé à l'orifice de sortie du boîtier.

D'autres caractéristiques et avantages de l'invention apparaîtront à la lumière de la description qui suit, faite en référence aux dessins annexés dans lesquels :

[Fig 1] : la figure 1 illustre une vue schématique d'un véhicule automobile incorporant un système de dépollution de particules de freinage ;

[Fig 2] : la figure 2 illustre une vue schématique de l'environnement d'une roue du véhicule automobile de la figure 1 comprenant le système de dépollution de la figure 1 ;

[Fig 3] : la figure 3 illustre une vue schématique du système de dépollution comprenant un dispositif de dépollution selon l'invention ;

[Fig 4] : la figure 4 représente une vue en perspective du dispositif de dépollution correspondant à au dispositif de dépollution représenté schématiquement sur la figure 3 ;

[Fig 5] : la figure 5 représente une vue en perspective et en éclatée selon un premier angle de vue d'une pompe centrifuge selon l'invention pouvant être monté sur le dispositif de dépollution de la figure 4 ;

[Fig 6] : la figure 6 représente une vue en perspective et en éclatée selon un deuxième angle de vue de la pompe de la figure 5 ;

[Fig 7] : la figure 7 est une vue en coupe longitudinale de la pompe des figures 5 et 6;

[Fig 8] : la figure 8 est une vue de dessous d'un dispositif d'atténuation selon l'invention, destiné à être monté dans l'organe d'aspiration des figures 5 et 6.

[Fig 9] : la figure 9 est une vue de dessus du dispositif d'atténuation de la figure 8 ;

[Fig 10] : la figure 10 est une vue schématique d'un canal d'atténuation acoustique du dispositif d'atténuation acoustique des figures 8 et 9 ;

[Fig 11] : la figure 11 est un graphique d'évolution de l'amortissement en décibel en fonction de la fréquence en Hertz d'un résonateur quart d'onde du dispositif d'atténuation acoustique de l'invention ;

[Fig 12] : la figure 12 est un graphique d'évolution de l'amortissement en décibel en fonction de la fréquence en Hertz de deux résonateurs quart d'onde du dispositif d'atténuation acoustique espacés d'une première distance (courbe en trait pointillé) et d'une deuxième distance (courbe en trait continu) ;

[Fig 13] la figure 13 illustre un premier graphique d'évolution de l'amortissement en décibel en fonction de la fréquence en Hertz d'une pompe centrifuge selon l'invention comprenant le dispositif d'atténuation acoustique selon l'invention comprenant une pluralité de résonateurs espacés d'un pas unique fixe ;

[Fig 14] la figure 14 illustre un deuxième graphique d'évolution de l'amortissement en décibel en fonction de la fréquence en Hertz d'une pompe centrifuge selon l'invention, dans lequel les résonateurs sont espacés les uns des autres par un pas optimal qui varie le long des résonateurs.

Dans la description qui va suivre, on utilisera les termes amont et aval en fonction du sens de l'écoulement du fluide. Ainsi, lorsqu'il sera précisé dans la présente description, que dans un système, un dispositif ou un organe, un premier élément est en amont d'un deuxième élément, il faudra comprendre que le courant de fluide circulant dans ledit système, dispositif ou organe traverse le premier élément avant le deuxième élément.

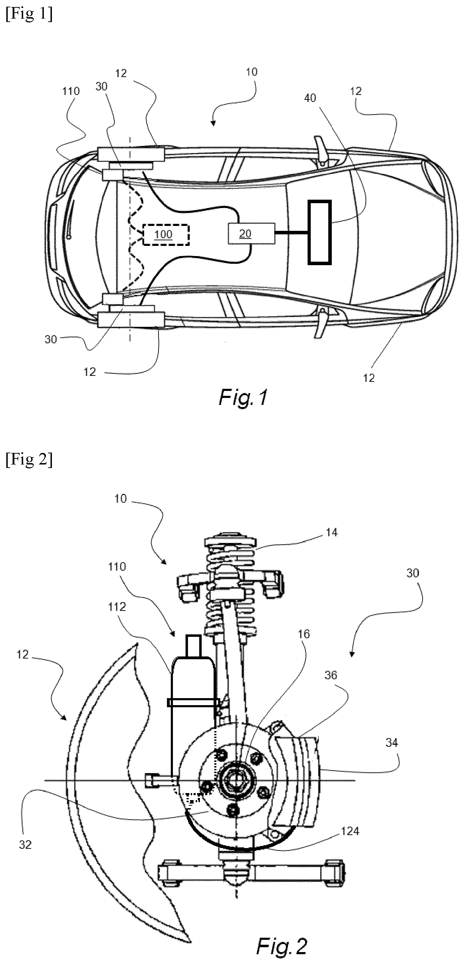

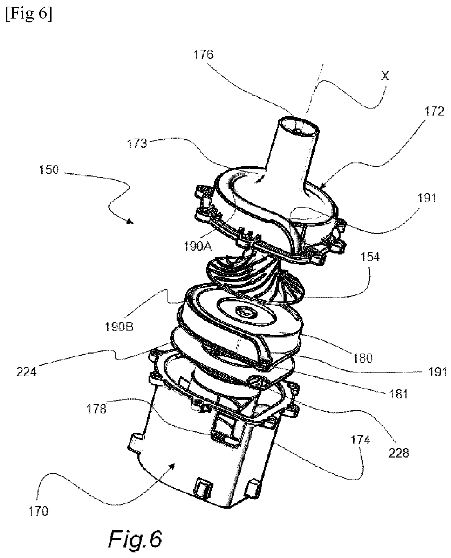

En outre, dans la description suivante, les termes « supérieur », « inférieur », « au-dessus », « en-dessous », « vertical », « horizontal » font référence aux éléments dans la position où ils se trouvent représentés sur les figures 1 à 14. Par ailleurs, dans la présente description, par direction circonférentielle, on entendra une direction tangente à une trajectoire quasi-circulaire centrée sur l'axe principal X.

On a représenté sur la figure 1 un véhicule automobile comprenant un système dépolluant par aspiration et collecte de particules de poussières de frein. Ce système est désigné par la référence générale 100 et le véhicule automobile est désigné par la référence générale 10. Dans le mode de réalisation préféré de l'invention, le véhicule 10 est un véhicule automobile, dans le cas d'espèce une voiture légère. Bien entendu, l'invention peut s'appliquer à d'autres véhicules, tels que des véhicules poids-lourds, ou des véhicules ferroviaires ou autres.

De façon générale mais non limitative, ce véhicule 10 comprend quatre roues 12 et un système de freinage 20 qui a pour fonction de ralentir le véhicule et de le maintenir à l'arrêt notamment pendant des périodes relativement courtes. Le système de freinage 20 est configuré pour appliquer un couple de freinage à au moins deux des roues 12 du véhicule 10 et de préférence aux quatre roues 12 du véhicule. De façon classique, les roues 12 sont aptes à être entraînées en rotation par un groupe motopropulseur, par exemple un moteur thermique ou un moteur électrique (non représenté) ou tout autre type de propulsion.

A cet effet, ce système de freinage 20 comprend de préférence quatre agencements de frein 30 associés à chacune des roues 12 et une unité de gestion de ces agencements de frein (seulement deux agencements de frein 30 sont représentés sur la figure 1). Ainsi, un usager du véhicule 10 peut piloter le système de freinage 20 par l'intermédiaire d'une unité de pilotage 40 du véhicule 10 qui pilote les agencements de frein 30 du système de freinage 20.

Un tel agencement de frein 30 est illustré en exemple sur la figure 2. De façon préférentielle, cet agencement 30 est de type frein à disque. La figure 2 illustre l'agencement de frein 30 monté sur une des roues 12 de véhicule 10, cette roue 12 étant partiellement représentée avec ses moyens de suspension 14.

Chaque agencement de frein 30 comprend de façon non limitative un disque rotor 32 tournant autour d'un axe et solidaire en rotation de la roue 12 auquel il est associé. Cet axe est généralement destiné à être fixé sur un moyeu 16 d'une roue 12 du véhicule 10.

En outre, l'agencement de frein 30 comprend un support 34 d'étrier disposé à cheval sur un bord extérieur du disque 32 et solidaire en rotation d'une partie fixe d'un châssis (non représenté) du véhicule 10. L'agencement de frein 30 comprend encore deux plaquettes de frein 36 pourvues de garnitures réalisées en matériau de friction (non directement visibles sur les figures) et montées de part et d'autre du disque 32 par l'intermédiaire du support d'étrier 34.

Ces plaquettes de frein 36 sont montées mobiles, par exemple sous l'effet d'un vérin hydraulique (non représenté), et sont destinées à venir serrer le disque rotor 32 pour le freiner jusqu'à l'arrêt de ce dernier en transformant l'énergie cinétique en énergie thermique. Les garnitures de plaquettes sont généralement réalisées en matériau de friction et relâchent des particules résultant de l'abrasion par frottement contre le disque 32. Pendant le freinage, le frottement entre la garniture de frein et le disque 32 génère de la poussière qui contient éventuellement des particules fines dangereuses pour la santé.

Afin de récupérer les particules de poussière de freinage, le système de récupération et de collecte 100 est destiné à aspirer et collecter des particules de poussières produites lors d'une action de freinage du véhicule automobile 10, de freinage à friction des agencements de frein 30 du véhicule 10 tels que décrits ci-dessus.

Le système 100 comprend au moins un dispositif 110 de dépollution selon l'invention et comprend de préférence autant de dispositif de dépollution 110 que d'agencements de frein 30. Par exemple, le système 100 comprend au moins deux dispositifs de dépollution 110 pour équiper les quatre agencements de frein 30 du véhicule 10. Dans la suite de la description, on ne décrira de façon détaillée qu'un seul dispositif de dépollution 110 qui sera désigné couramment par la référence générale 110.

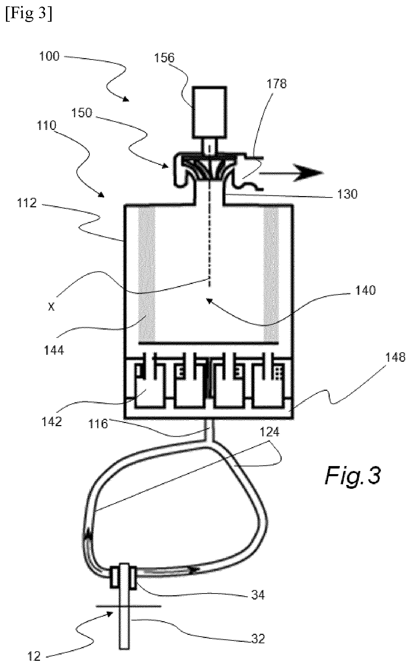

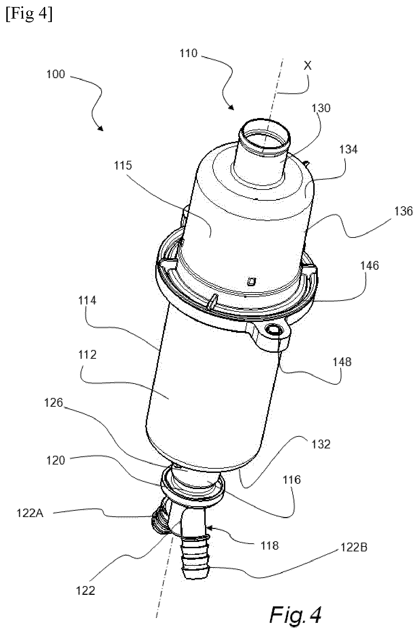

Le dispositif 110 a pour fonction de récupérer et de collecter des poussières et des particules de freinage, par exemple provenant d'un des agencements de freinage 30 du véhicule automobile et est illustré schématiquement et fonctionnellement sur les figures 3 et 4.

Comme cela est illustré en détail sur ces figures, le dispositif 110 comprend un corps de boîtier 112. Ce boîtier 112 a une forme générale tubulaire, par exemple cylindrique autour d'un axe principal X. Ce boîtier 112 se présente par exemple en deux parties 114 et 115 assemblées entre elles par divers procédés d'assemblage libérables ou non libérables qui ne seront pas plus détaillés.

En outre, ce corps de boîtier 112 comprend un orifice d'entrée 116 pour un flux d'air sale chargé en particules et prélevés dans l'environnement immédiat des plaquettes de frein 30.

A cet effet, le dispositif 110 comprend également un embout connecteur 118 destiné à être raccordé à l'orifice d'entrée 116 et à être raccordé à deux tuyaux flexibles 124 débouchant à proximité des plaquettes de frein 30 et représentés schématiquement en figure 2. Cet embout 118 est divisé le long de son axe principal en une première partie 120 destinée à être raccordée à l'orifice d'entrée 116 et en une deuxième partie 122 séparée en deux branches 122A et 122B. Dans l'exemple illustré, chacune des branches 122A et 122B de l'embout connecteur 122 présente une extrémité de raccordement à un tuyau flexible 124, de préférence par emmanchement, qui est pourvue par exemple d'un relief externe en cran sapin. Par exemple, l'orifice d'entrée 116 se présente sous forme d'une canule 126 et l'embout connecteur 122 est raccordé de préférence par vissage sur la canule de raccordement 126 de l'orifice 116.

En outre, le corps de boîtier 112 comprend encore une sortie 130 pour l'évacuation d'un flux d'air purifié. Dans l'exemple illustré et de préférence, l'orifice d'entrée 116 et l'orifice de sortie 130 sont ménagés respectivement sur des parois d'extrémité 132 et 134 du corps de boîtier tubulaire 112, le corps de boîtier 112 présentant par exemple une paroi périphérique 136 sensiblement cylindrique et les parois d'extrémité 132 et 134, par exemple ayant une forme générale circulaire.

Par ailleurs, le dispositif 110 comprend au moins un organe 140 de séparation, logé dans le boîtier 112, pour séparer des particules du flux d'air sale, au travers duquel le flux d'air circule entre l'entrée 116 et la sortie 130.

Un tel organe de séparation 140 peut comprendre une cartouche filtrante 144 ou encore une chambre cyclonique 142, voire multi-cyclonique ou encore une association des deux, comme cela est représenté très schématiquement sur la figure 3. De tels organes de séparation 140 sont bien connus de l'art antérieur et sont décrits en détail par exemple dans la demande de brevet CN1864619A avec leurs fonctionnements associés et ne seront pas plus détaillés ci-après.

Par ailleurs, de façon préférentielle, le boîtier 112 est dimensionné pour être logé dans un espace environnant une roue 12 de véhicule automobile 10, par exemple autour d'une jambe d'un amortisseur de suspension 14 tel que cela est illustré sur la figure 2. A cet effet, dans l'exemple illustré, le dispositif 110 comprend encore une bride 146 circonférentielle munie de deux pattes d'extension radiale 148 diamétralement opposées, chacune des pattes est par exemple percée pour retenir un jonc de fixation (non représenté).

En outre, le boîtier 112 est relié, via le conduit d'aspiration 124, à un des agencements de frein à disque 30. De préférence, le conduit d'aspiration 124 comprend une de ses extrémités située à proximité immédiate de la zone où cette poussière de frein est susceptible d'être générée. L'autre de ses extrémités débouche de préférence à l'intérieur du corps de collecte du dispositif 110 par l'orifice d'entrée 116 du boîtier 112 et l'embout connecteur 118.

Le dispositif de collecte 110 comprend encore par exemple un réservoir 148 de collecte logé à l'intérieur du boîtier 14 illustré schématiquement par la figure 3. Par exemple, le réservoir 148 est associé au premier organe de séparation 142 pour former une chambre du séparateur cyclonique 142. Ce séparateur cyclonique 142 a pour but de capter les particules ayant un diamètre par exemple supérieur à 10 microns. Dans l'exemple illustré, le dispositif 110 comprend en outre un deuxième organe de séparation 144, formé par la cartouche filtrante 144 chargée de traiter des particules présentant un diamètre inférieur à 10 microns.

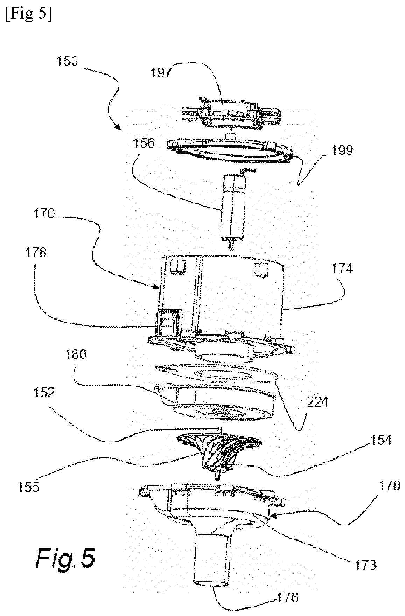

Conformément à l'invention, afin de produire une circulation d'air efficace à l'intérieur du boîtier de récupération 112 entre l'entrée 116 et la sortie 130 de ce boîtier 112, le dispositif 110 comprend encore un organe 150 d'aspiration du flux d'air purifié, représenté schématiquement en figure 3 et en détail sur les figures 5 à 7.

Conformément à l'invention, l'organe d'aspiration du flux d'air 150 comprend une pompe centrifuge d'aspiration du flux d'air purifié, représentée schématiquement sur les figures 5 à 7. Cette pompe 150 est montée en sortie du boîtier 112, par exemple par branchement fluidique étanche, directement sur l'orifice de sortie 130 du dispositif de collecte 110.

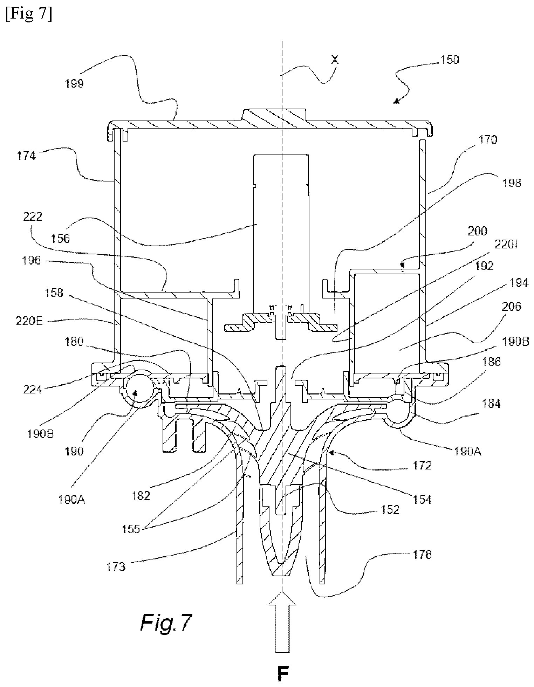

Sur la figure 7, la flèche F représente le sens de circulation normal d'un fluide dans la pompe centrifuge 150. Par la suite, les termes « amont » et « aval » sont définis par rapport au sens de circulation normal du fluide dans la pompe centrifuge 150.

Dans le mode de réalisation de l'invention, la pompe centrifuge 150 comprend un arbre 152, définissant un axe principal X de la pompe 150, une roue 154 montée sur l'arbre 152 et un moteur 156, de préférence électrique, d'entraînement en rotation de la roue 154. La pompe centrifuge 150 comprend encore un carter 170 pour loger les éléments précités. Dans cet exemple, ce carter 170 comprend principalement un carter amont 172, logeant la roue 154 et l'arbre 152, et un carter aval 174 logeant le moteur 156.

Par exemple, la roue 154 comprend également un moyeu central 158 sur lequel est monté l'arbre 152. Dans l'exemple décrit, la roue 154 est formée d'une pièce avec l'arbre 152.

En outre, de préférence, la roue 154 présente un profil adapté à l'écoulement centrifuge d'un flux gazeux à l'intérieur de la chambre de pompe 182. Dans cet exemple, la roue 154 a une forme générale de cône tronqué dont l'angle d'ouverture au sommet se rétrécit progressivement, par exemple selon un profil hyperboloïde. La roue 154 porte de préférence sur sa surface externe une pluralité d'aubes 155 de guidage, chacune venant s'étendre de façon sensiblement transversale à l'intérieur du carter amont 172, comme cela est visible sur la figure 7.

Par ailleurs, l'arbre 152 qui s'étend selon l'axe principal de la pompe 150 est maintenu axialement par deux paliers de guidage (non représentés) positionnés sensiblement à ses extrémités.

Par ailleurs, le carter 170 de la pompe centrifuge 150 comprend un orifice 176 d'entrée pour admettre un flux d'air entrant et un orifice 178 de sortie pour refouler ce flux d'air après circulation à l'intérieur du carter 170.

Comme cela est illustré sur les figures 5 à 7, le carter amont 172 comprend dans le mode de réalisation préféré de l'invention, un corps inférieur 173 et un corps supérieur 180, qui sont assemblés ensemble pour définir un volume à l'intérieur duquel prend place l'arbre 152 et la roue 154.

Dans l'exemple illustré sur les figures 5 à 7, le corps inférieur 173 du carter amont 172 a une forme générale creuse. Le corps inférieur 173 est de préférence conformé pour envelopper sensiblement la roue 154. A cet effet, le corps inférieur 173 présente une portion annulaire amont étroite délimitant à son extrémité amont libre l'orifice d'entrée 176 et reliée à son autre extrémité aval à une portion aval cylindrique conique qui s'évase progressivement en amont.

Dans le mode de réalisation préféré de l'invention, le corps inférieur 173 présente encore un rebord périphérique 184 délimitant un espace intérieur de réception du corps supérieur 180.

De préférence, le corps supérieur 180 a une forme générale de coupelle présentant par exemple un fond central sensiblement plat relié à une paroi périphérique annulaire formant un rebord périphérique annulaire 186. De préférence, dans le fond sensiblement plat du corps supérieur 180, est prévu un espace de logement central 192 pour l'extrémité de l'arbre 152, assurant son maintien selon l'axe principal X.

Ainsi, dans ce mode de réalisation, l'assemblage des corps inférieur 173 et supérieur 180 est réalisé de manière étanche, le corps supérieur 180 venant coopérer avec le corps inférieur par encastrement, par exemple par complémentarité de forme du rebord périphérique 186 du corps supérieur 180 et du rebord périphérique 184 du corps inférieur 173.

Par ailleurs, dans cet exemple et de façon connue en soi, le corps inférieur 173 et le corps supérieur 180 sont configurés pour constituer, une fois assemblés, un volume interne caractéristique d'une pompe centrifuge 150, comme cela va être détaillé ci-après.

Dans cet exemple, les corps inférieur 173 et supérieur 180 délimitent ensemble à l'état assemblé une chambre de compression torique 190 d'écoulement du flux gazeux de forme sensiblement circulaire autour de l'axe principal X de la pompe 150. Les corps inférieur 173 et supérieur 180 présentent par exemple chacun, en périphérie, un relief incurvé respectivement 190A et 190B de forme sensiblement semi-cylindrique selon une direction circonférentielle qui par assemblage délimite la chambre de compression torique 190 (figure 7). Cette chambre de compression torique 190 est conformée pour permettre une circulation centrifuge du flux gazeux.

Dans ce mode de réalisation préféré, le corps supérieur 180 comprend un orifice de sortie 181 du flux gazeux du carter aval 172, après circulation dans la chambre de compression torique 190, débouchant axialement à l'intérieur du carter amont 174.

A cet effet, dans cet exemple, la chambre de compression 190 se termine à son extrémité aval par un conduit 191 de refoulement du flux gazeux, raccordé en amont à l'orifice de sortie 181 et configuré pour opérer une déviation de la direction d'écoulement du flux gazeux depuis sa direction principalement d'écoulement tangentielle en sortie de la chambre de compression torique 190 jusqu'à sa direction d'écoulement axiale dans l'orifice de sortie 181 du carter amont 172.

De préférence, ce conduit 191 présente un profil curviligne et est incurvé de manière régulière afin de diminuer toute résistance à l'écoulement du flux gazeux pour atteindre l'orifice de sortie 181.

Comme cela est illustré sur ces figures, le carter aval 174 comprend un capot de forme générale quasiment cylindrique délimitant une paroi périphérique extérieure 194 et une paroi périphérique intérieure 196 s'étendant autour d'un espace central 198 de logement du moteur 156. En outre, dans cet exemple, le carter aval 174 comprend une paroi de couvercle 199, par exemple rapportée par clipsage sur la paroi périphérique extérieure 194.

On notera que, dans l'exemple illustré, la paroi périphérique extérieure du carter aval 174 ne présente pas une section transversale parfaitement circulaire mais est légèrement allongée et en forme de « goutte d'eau », c'est-à-dire présentant un côté arrondi et du côté opposé, une extrémité légèrement effilée en pointe. Il en va de même, dans l'exemple illustré, de la géométrie du corps supérieur 180 et du corps inférieur 173. Dans cet exemple, cette géométrie effilée permet de s'adapter à la géométrie du conduit 191 de déviation du flux gazeux en sortie de la chambre de compression torique 190.

En outre, on notera que le carter 170 présente des moyens de fixation de fonctions diverses qui ne seront pas détaillées par la suite. Par ailleurs, on a représenté dans cet exemple sur les figures, une carte électronique 197 qui peut être ou non embarquée et qui comprend des moyens de commande électronique du moteur 156.

En fonctionnement, la pompe centrifuge 150 est configurée pour aspirer axialement de l'air par l'orifice d'admission 176, pour accélérer radialement à l'intérieur de la chambre 190 de compression, et refouler l'air par l'orifice intermédiaire 181 de la chambre de compression 190. On notera que le refoulement du flux gazeux hors de la chambre de compression 190 se fait axialement par l'orifice intermédiaire 181, en direction et à l'intérieur du carter aval 174 comme cela va être expliqué en détail ci-dessous.

La pompe centrifuge 150 comprend en outre un dispositif d'atténuation acoustique selon l'invention, désigné par la référence générale 200. Ce dispositif d'atténuation 200 est configuré pour être monté sur le trajet d'écoulement du fluide à l'intérieur du carter 170 de la pompe 150, en amont de l'orifice de refoulement 178 de la pompe centrifuge 150 dans l'atmosphère.

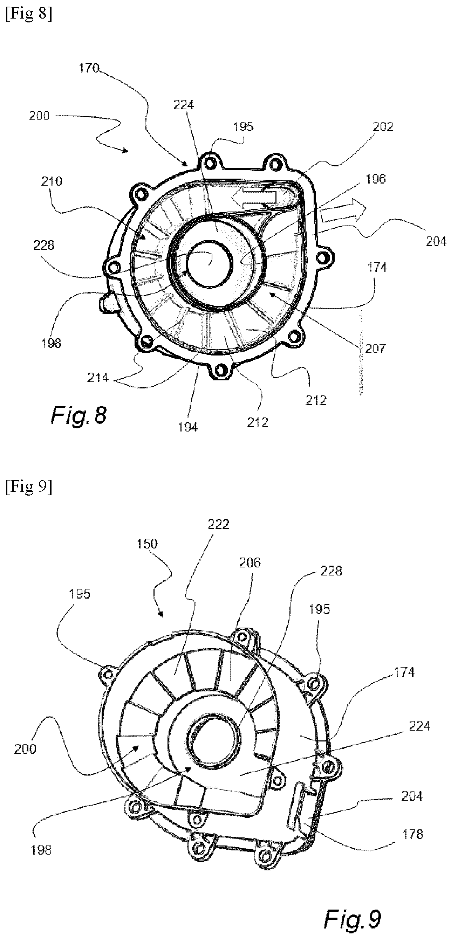

Conformément à l'invention, le dispositif 200 d'atténuation acoustique, désigné ci-après dispositif atténuateur 200, est prévu de façon générale pour être monté sur un dispositif électromécanique parcouru par un flux gazeux susceptible de propager des ondes acoustiques, et dans le cas présent, dans la pompe centrifuge 150. En référence aux figures 8 et 9, l'atténuateur 200 comprend un orifice 202 d'entrée du flux gazeux après circulation à l'intérieur du carter 170 de la pompe centrifuge 150, et dans cet exemple après circulation à l'intérieur de la chambre de compression 190, et un orifice 204 de sortie du flux gazeux, en particulier en vue de son refoulement dans l'atmosphère.

Dans le mode de réalisation préféré de l'invention, l'orifice de sortie 204 du flux gazeux correspond à l'orifice de refoulement 178 de la pompe centrifuge 150, comme cela sera décrit plus en détail ci-après. Dans cet exemple, l'orifice d'entrée 202 est en communication fluidique avec l'orifice de sortie 181 de la chambre de compression 190.

Comme cela est illustré sur la figure 8, le dispositif atténuateur 200 se présente sous la forme d'un canal 206 de forme générale curviligne définissant un trajet d'écoulement du flux gazeux sensiblement curviligne autour d'un axe principal entre les orifices d'entrée 202 et de sortie 204. Dans l'exemple décrit, l'axe principal du canal 206 est confondu avec l'axe principal X de la pompe 150.

Dans l'exemple illustré sur les figures, le canal 206 a une forme générale globalement annulaire autour de l'axe principal X. Par exemple, l'orifice d'entrée 202 et l'orifice 204 sont disposés de façon adjacente l'un de l'autre. Par exemple, le canal 206 se referme sur lui-même pour former un anneau en rapprochant l'entrée 202 et la sortie 204 l'une de l'autre. Dans ce cas, le trajet d'écoulement suit un parcours quasi-circulaire entre l'orifice d'entrée 202 et l'orifice de sortie 204.

Toutefois, dans une variante non illustrée, le canal 206 peut s'enrouler au moins partiellement autour de l'axe X selon une configuration en spirale, se développant de préférence vers l'extérieur entre l'orifice d'entrée 202 et l'orifice de sortie 204.

En particulier, le dispositif 200 comprend une pluralité d'éléments atténuateurs acoustiques 210 accordés sur une fréquence de résonance f0 d'atténuation avec une bande de fréquences d'atténuation associée. Les résonateurs 210 sont répartis en série circulairement le long dudit canal 206 de façon à être en interaction avec le flux gazeux s'écoulant dans le canal 206. Conformément à l'invention, les éléments atténuateurs acoustiques 210 sont formés par des cavités 212 de résonateurs quart d'onde.

Il est rappelé que la fréquence d'action f d'un résonateur quart d'onde est définie, en première approximation, par la formule suivante :

$$f = \frac{(2n + 1)}{4}\frac{v}{L}$$

Avec v qui désigne la célérité du son, n désigne un nombre entier (n=0, 1, 2...) correspondant à un mode résonant et L désigne la longueur efficace du quart d'onde, c'est-à-dire la somme de la longueur géométrique d'un tube formant le résonateur quart d'onde et d'une fraction du volume d'air de la veine principale d'écoulement du fluide en communication avec celui-ci. Pour simplifier les calculs dans la suite de la description, on négligera la fraction du volume d'air de la veine principale et on définira la longueur L du résonateur comme étant égale à la profondeur du tube résonant.

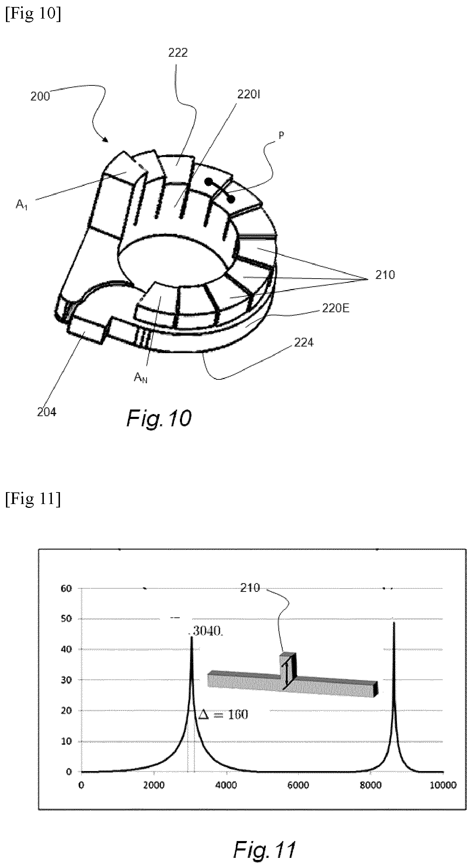

On a représenté sur les figures 8 à 10, une pluralité de résonateurs 210 disposés en série. On notera dans la suite de la description, les résonateurs selon une série Ai pour i allant de 1 à N, A1 étant le premier résonateur 210 de la série, situé après l'entrée 202 et AN étant le dernier résonateur 210, situé après la sortie 204. Sur les figures 8 et 10, N a pour valeur le nombre onze car il y a onze résonateurs 210 disposés en série.

Dans le mode de réalisation préféré de l'invention, le dispositif atténuateur 200 comprend un corps 220 pourvu de parois périphériques extérieure 220E et intérieure 220I annulaires de façon à délimiter radialement le canal 206 autour de l'axe X. Le corps du canal 206 comprend encore une paroi transversale supérieure 222 et une paroi transversale inférieure 224 délimitant axialement le canal 206. Le canal 206 est ainsi illustré très schématiquement sur la figure 10.

Dans le mode de réalisation préféré de l'invention, le canal 206 du dispositif d'atténuation 200 s'étend dans un espace annulaire défini entre les deux parois périphériques extérieure 194 et intérieure 196 du capot 174 de la pompe 150, ces deux parois périphériques 194 et 196 formant les parois de délimitation radiales 220E et 220I du canal 206.

Par ailleurs, on notera, que dans ce mode de réalisation préféré, la paroi inférieure 224 est formée par une paroi annulaire (figure 8) s'étendant autour d'un trou central 228 de logement du moteur 156 qui ferme le canal 206 transversalement (comme cela est visible sur la figure 7). Par ailleurs, la paroi inférieure 224 comprend un orifice définissant l'entrée 202 du canal 206, configurée pour être positionnée au-dessus de l'orifice de sortie 181 du carter aval 172.

On va maintenant décrire plus en détail le canal d'atténuation acoustique 206. Dans le mode de réalisation de l'invention, le canal 206 comprend une structure géométrique 207 interne, visible par exemple sur la figure 8, s'étendant le long d'une paroi du canal 206, configurée pour délimiter un passage intérieur d'écoulement principal du flux gazeux de parcours libre (globalement dépourvu d'obstacle d'écoulement du flux gazeux) et une pluralité de cavités 212 débouchant dans le passage.

Le canal 206 est modélisé de façon géométrique et très schématique en figure 10. Sur cette figure 10, le canal 206 comprend une forme générale annulaire en forme de couronne étagée, un premier niveau correspondant au passage d'écoulement principal et un deuxième niveau étant compartimenté ou segmenté pour former la pluralité de cavités 212 des résonateurs 210.

Par exemple, la structure géométrique interne 207 comprend une pluralité de cloisons 214 de séparation radiale délimitant avec les parois extérieure 220E et intérieure 220I des compartiments formant les cavités de résonance 212, les cloisons 214 étant dimensionnées pour laisser libre un passage d'écoulement principal du flux gazeux à l'intérieur du canal 206.

Une paroi du canal 206 présente selon une direction circonférentielle un profil en gradin configuré pour délimiter les cavités 212 avec une hauteur incrémentale variable d'une cavité 212 à l'autre. Selon l'invention, la paroi du canal 206 présentant ce profil en gradin incrémental est formé par la paroi supérieure 222 du canal 206 et s'étend transversalement, par exemple à l'intérieur du carter aval 174.

Ainsi, dans ce mode de réalisation, la paroi supérieure 222 est configurée pour délimiter axialement la profondeur des cavités de résonances 212 formant les résonateurs 210. Bien entendu, dans une variante non illustrée, une autre paroi du canal 206 que la paroi supérieure 222 peut remplir cette fonction de délimitation de la profondeur des cavités 212 de résonances 210, par exemple la paroi périphérique extérieure 220E.

De préférence, la hauteur d'une cavité 210 adjacente à l'autre varie de façon croissante ou décroissante dans le sens allant de l'entrée 202 vers la sortie 204 et de préférence de façon incrémentale.

Sur cette figure 10, la pluralité de résonateurs 210 est délimitée selon la direction axiale par des marches de hauteur régulièrement décroissante formées au-dessus du passage d'écoulement principal de parcours libre de l'entrée 202 vers la sortie 204. Ainsi, de préférence, comme cela apparaît clairement sur cette figure 10, le canal 206 présente une structure en escalier tournant autour d'une cage centrale formée dans cet exemple par l'espace de logement 198 du moteur 156.

Par exemple, le canal 206 ayant une forme générale sensiblement annulaire, les résonateurs 210 sont séparés circonférentiellement par des cloisons 214 positionnées radialement le long du trajet d'écoulement du flux gazeux dans le canal 206 tout en laissant un passage d'écoulement principal du flux gazeux à l'intérieur du canal 206, de parcours libre (c'est-à-dire de préférence non cloisonné ou globalement dépourvu d'obstacle d'écoulement du flux gazeux).

De préférence, la cavité 212 de chaque résonateur 210 a une forme sensiblement tubulaire configurée pour déboucher à l'intérieur du canal 206, et dans cet exemple du passage d'écoulement libre et a une profondeur correspondant à une fréquence de résonance prédéfinie.

Comme cela est illustré sur la figure 8, la section transversale de chaque cavité 212 de résonateur 210 présente des bords curvilignes en forme d'arc de cercle suivant le contour intérieur et extérieur du canal 206 qui est de forme générale annulaire. En effet, dans le mode de réalisation préféré de l'invention, la forme générale des cavités 212 est délimitée intérieurement et extérieurement par la courbure respectivement interne et externe du canal 206. Bien entendu, la forme générale des cavités 212 n'est pas limitée à la forme précédemment décrite.

De préférence, les résonateurs 210 sont tous dimensionnellement différents deux à deux afin d'assurer une absorption de chaque résonateur 210 à une fréquence de résonance d'atténuation f0 différente. L'intégration d'une pluralité de résonateurs A1 à AN tous différents deux à deux par leurs paramètres dimensionnels permet d'assurer une absorption de chaque résonateur Ai à une fréquence de résonance différente.

Il est souhaitable que ces différentes fréquences de résonance f0 soient suffisamment proches les unes des autres afin d'obtenir un recouvrement partiel suffisamment important des bandes de fréquences chacune associées à une fréquence de résonance d'un résonateur Ai. Ceci permet d'obtenir une bande élargie et continue de fréquences d'atténuation. Cela est réalisé en choisissant les dimensions et les espacements des résonateurs 210 de manière adaptée, comme cela va être expliqué ci-dessous.

Dans cette application spécifique de nuisances sonores liées au fonctionnement de la pompe centrifuge, la bande de fréquences à traiter est comprise entre 2000 Hz et 8000 Hz et l'exigence est d'obtenir une atténuation ("Transmission Loss") ayant une valeur minimale de 20 dB sur la bande de fréquences précitée.

On a représenté sur la figure 11 un graphique comprenant une courbe de l'amortissement en décibel selon l'axe des ordonnées en fonction de la fréquence en Hertz selon l'axe des abscisses d'un résonateur 210 ayant une fréquence de résonance f0 située autour de 3000 Hertz.

Sur le graphique, on observe deux pics de fréquence d'environ 3000 Hertz, correspondant au mode résonant principal (n=0), et 8500 Hertz (n=1), correspondant à un mode harmonique, et associés chacun à une largeur de bande d'atténuation à vingt décibels respectivement d'environ 160 Hertz et 80 Hertz. Par conséquent, on note qu'avec un seul résonateur 210 l'atténuation se fait de façon discrète et non sur une plage continue de fréquences. On désignera par la suite par « bande fréquentielle associée », la bande fréquentielle associée à une fréquence de résonance d'un résonateur à l'intérieur de laquelle l'atténuation est supérieure à vingt décibels,

Ainsi, de préférence, dans le mode de réalisation préféré de l'invention, au moins deux résonateurs 210 ont des fréquences de résonance f0 suffisamment proches pour avoir un recouvrement partiel de leurs bandes fréquentielles associées. On choisira la distance circonférentielle séparant au moins deux résonateurs 210 de la série de telle sorte qu'un phénomène de couplage se produise entre les deux résonateurs 210 par recouvrement spectral continu de leurs bandes fréquentielles d'atténuation supérieures à vingt décibels. Ceci permet de produire une bande fréquentielle continue élargie d'atténuation supérieure à vingt décibels.

Au sens de la présente invention, la distance circonférentielle est définie de centre à centre pour chaque résonateur 210 selon une ligne directrice médiane circulaire du canal 206, comme illustré schématiquement sur la figure 10. Le pas P est défini comme la distance circonférentielle séparant deux résonateurs consécutifs de la série.

Il a été ainsi remarqué que, pour certaines valeurs de pas P, la portion du canal 206 s'étendant entre deux résonateurs 210 adjacents se comporte comme un tube résonant dit « ouvert-ouvert » qui peut être à l'origine d'un phénomène dit « d'anti-résonance ». La portion de canal 206 séparant les deux résonateurs 210 se comportent comme un tube résonant ouvert-ouvert qui va amplifier les ondes acoustiques proches de la fréquence de résonance des deux résonateurs 210 adjacents par interférence constructive des ondes acoustiques. Ces interférences constructives vont se traduire sur la courbe spectrale par un phénomène d'anti-résonance de l'atténuation en décibel formant un pic inversé.

Afin d'éviter le phénomène d'anti-résonance entre les deux résonateurs 210 adjacents qui pourrait diminuer l'efficacité globale du dispositif d'atténuation acoustique, il est souhaitable de sélectionner de façon prédéfinie la distance circonférentielle P.

En effet, il a été observé de façon étonnante que pour produire ce phénomène de couplage sans anti-résonance entre deux résonateurs adjacents Ai et Ai+1 de la série, la distance circonférentielle optimale, désignée par Popt(i) entre deux résonateurs adjacents Ai et Ai+1 doit vérifier la formule suivante de détermination du pas optimal :

$$Popt(i) = \frac{L_{(i)} + L_{(i+1)}}{2}$$

$$L(i) = \frac{\lambda_{(i)}}{4} = \frac{v}{4f0_{(i)}}$$

Autrement exprimée :

$$Popt(i) = \frac{v}{8} \times \left( \frac{1}{f0_{(i)}} + \frac{1}{f0_{(i+1)}} \right)$$

avec v : vitesse du son dans l'air (qui est approximativement de 344 mètres par seconde à 20°C et au niveau de la mer).
L(i) : profondeur de la cavité de résonance Ai
f0(i) : fréquence de résonance du résonateur Ai
f0(i+1) : fréquence de résonance du résonateur Ai+1.

On notera que bien que l'on observe un phénomène de couplage optimal pour une valeur de pas sensiblement égale à Popt(i), on obtient un résultat suffisant dans une plage de valeur de pas P(i) définie comme suit, avec une tolérance pouvant ainsi aller jusqu'à 50% de la valeur optimale du pas Popt(i) pour un résonateur Ai :

$$P(i) \in [0.5 \times Popt(i); 1.5 \times Popt(i)]$$

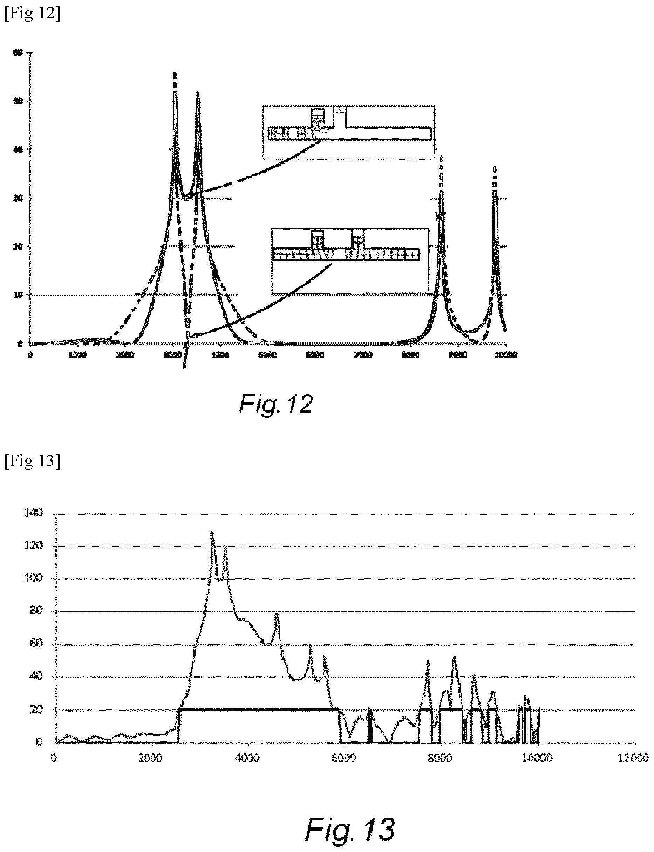

Sur la figure 12, on a représenté les courbes de l'atténuation, exprimée en décibel selon l'axe des ordonnées, en fonction de la fréquence (exprimée en Hertz) selon l'axe des abscisses, pour deux résonateurs consécutifs 210 de fréquences de résonance égales à 3000 Hertz et 3500 Hertz, avec une séparation d'une distance circonférentielle de 56 millimètres (traits pointillés) et avec une séparation d'une distance circonférentielle de 27 millimètres (trait continu).
Selon la formule ci-dessus, le pas P entre ces deux résonateurs 210 doit être compris dans la plage de valeurs en millimètres de [13.3 ; 39.9] avec un couplage optimal autour de la valeur Popt de 27 millimètres.
La première courbe est représentée en trait pointillé et illustre l'atténuation obtenue avec deux résonateurs 210 séparés d'une distance circonférentielle égale à 56 millimètres, située donc en dehors de la plage recommandée telle que définie et obtenue ci-dessus. On observe un pic d'anti-résonance autour de la fréquence de 3320Hz.
La deuxième courbe représentée en trait continu illustre l'atténuation en décibels obtenue par les deux résonateurs consécutifs séparés cette fois d'une distance circonférentielle égale à 27 millimètres. Il va se produire dans la portion de canal 206 séparant les deux résonateurs 210 un phénomène d'interférence destructive des ondes acoustiques de fréquences proches de la fréquence de résonance. Ces interférences destructives vont se traduire sur la courbe spectrale par un phénomène de couplage des fréquences de résonance d'atténuation des deux résonateurs adjacents, comme cela apparaît clairement sur la courbe en trait continu.
Comme cela ressort clairement de cette deuxième courbe, le phénomène de couplage des deux résonateurs consécutifs 210 a pour effet de produire une bande continue d'atténuation des fréquences au-dessus de vingt décibels entre les deux fréquences de résonance associées aux deux résonateurs 210.
Dans le mode de réalisation préféré de l'invention, le pas entre deux résonateurs adjacents 210 varie de façon croissante ou décroissante le long de la série des résonateurs Ai et le pas P(i) défini entre le résonateur Ai et le résonateur Ai+1 est compris entre le pas P(i-1) défini entre le résonateur Ai-1 et le résonateur Ai et le pas P(i+1) du résonateur Ai+1 et du résonateur Ai+2.
Par exemple, en recherchant une atténuation d'au moins vingt décibels dans la plage de fréquences 2000 Hertz à 5500 hertz, avec des fréquences de résonances tous les 500 Hertz, le pas optimal Popt(i) entre un résonateur Ai et un résonateur Ai+1 varie dans la plage de fréquences de 16 millimètres à 39 millimètres.
Dans le mode de réalisation illustré de l'invention, le pas P peut être choisi constant entre deux résonateurs 210 sur la série de résonateurs 210, en prenant par exemple pour valeur de pas la moyenne du pas optimal minimal Popt_{min} et

du pas optimal Popt$_{max}$ de tous les pas optimaux Popt(i) définis pour la série des résonateurs Ai, autrement exprimés par la formule de détermination du pas moyen P$_{moyen}$ ci-dessous :

$$P_{moyen} = \frac{Popt_{min} + Popt_{max}}{2}$$

$$Popt_{min} = Minimum\left(Popt(i)\right) \forall i \text{ et } Popt_{max} = Maximum\left(Popt(i)\right) \forall i$$

On a représenté sur la figure 13, un premier graphique illustrant la courbe représentant l'atténuation en décibels en fonction de la fréquence en Hertz pour le dispositif d'atténuation de l'invention et dans lequel le pas correspond à un pas constant sur la série de résonateurs 210 et choisi conformément à la formule décrite ci-dessus de définition d'un pas moyen P$_{moyen}$.

Les fréquences de résonance f0 des résonateurs A1 à AN sont choisies entre 2500 Hertz et 6000 Hertz, par incrément de 500 Hertz.

On note qu'avec ce pas constant, la courbe présente une large plage de fréquences atténuées d'au moins 20 décibels, notamment entre 2500 Hertz et 6000 Hertz.

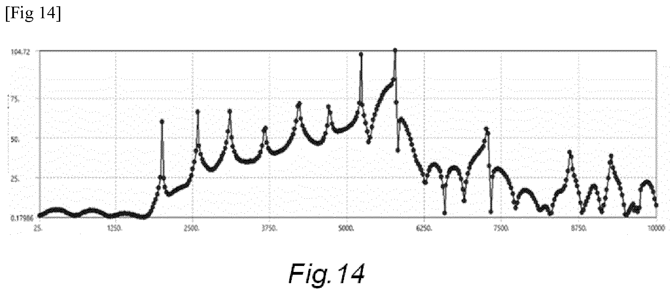

On a représenté sur la figure 14, un deuxième graphique illustrant la courbe représentant l'atténuation en décibels par rapport à la fréquence en Hertz pour le dispositif d'atténuation de l'invention et dans lequel le pas entre deux résonateurs adjacents Ai et Ai+1 varie sur la série de résonateurs 210 et est choisi conformément à la formule de détermination du pas optimal Popt(i).

On obtient une atténuation ("Transmission Loss") ayant une valeur minimale de 20 dB sur la bande de fréquences comprise entre 2000Hz et 6300Hz environ, avec un maximum d'atténuation pour les fréquences comprises entre 5000Hz et 6300Hz.

On va maintenant décrire les principaux aspects du fonctionnement du système de récupération de particules de freinage selon l'invention.

Au cours d'une première étape, l'usager du véhicule 10 actionne le frein de son véhicule 10. Lors de cette action de freinage, des particules de poussières de freinage liées à l'abrasion des garnitures de frein sont rejetées. Lors de l'actionnement du frein, le système de freinage pilote simultanément la mise en marche des pompes centrifuges 150 associées à chaque agencement de frein 30.

Dans l'organe 150, la mise en marche de la roue 154 en rotation va produire un effet d'aspiration qui va venir entraîner le flux d'air purifié au travers de l'organe 150. Ainsi, le flux d'air sale est entraîné par aspiration par le tuyau et entre dans le boîtier 112. Il se décharge d'une partie de ses particules de poussières par le ou les organes de séparation 140 qu'il traverse au cours de son trajet dans le boîtier 112 du dispositif 110. Le flux d'air sale ainsi purifié sort par l'orifice de sortie 130 du boîtier 112 et entre dans l'organe 150.

A cet effet, le flux gazeux est aspiré dans le carter 170 de la pompe 150 par l'orifice d'admission 174. La roue 154 logée dans le carter aval 172 est entraînée en rotation par le moteur 156 pour aspirer axialement, accélérer radialement et refouler tangentiellement le flux gazeux qui est dévié axialement au travers du conduit 191 jusqu'à l'orifice 181 en sortie de la chambre compression 190. Le flux gazeux entre axialement dans le canal 206 par l'orifice d'entrée 202 puis est refoulé par l'orifice de sortie du canal 206 également orifice de refoulement 178 de la pompe 150. Le long du canal d'atténuation acoustique 206, les ondes sonores sont atténuées d'au moins 20 décibels dans la bande de fréquences comprises entre 2500 Hertz et 6000 Hertz, grâce à la série de résonateurs 210 disposés le long du canal 206.

Dans l'exemple illustré sur le graphique de la figure 13 ou de la figure 14, on voit notamment que dans une gamme de fréquences choisies entre 2500 hertz et 6000 hertz, le canal d'atténuation acoustique 206 permet de réduire sensiblement les bruits générés par la pompe 150 dans cette plage.

L'invention présente l'avantage d'être faiblement encombrante permettant par exemple son intégration dans l'enveloppe moteur d'une pompe centrifuge tout en étant particulièrement performante dans la plage de fréquences désirées.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant les formes de détail de la pompe et du canal.

## Revendications

**1.** Dispositif (200) d'atténuation acoustique pour un dispositif électromécanique (150) parcouru par un flux gazeux susceptible de propager des ondes acoustiques, comprenant des orifices d'entrée (202) et de sortie (204) d'un flux gazeux, en particulier en vue d'une évacuation dans l'atmosphère, **caractérisé en ce que** le dispositif (200) comprend un canal (206) de forme générale curviligne autour d'un axe principal (X) du dispositif (200) définissant un trajet d'écoulement du flux gazeux curviligne entre les orifices d'entrée (202) et de sortie (204), et comprend une pluralité d'éléments atténuateurs acoustiques (210) accordés sur une fréquence de résonance d'atténuation (f0), disposés consécutivement en série le long dudit canal (206) de façon à être en interaction avec le flux gazeux s'écoulant dans le canal (206), les éléments atténuateurs acoustiques (210) étant formés par des cavités (212) de résonateurs quart d'onde et étant appelés résonateurs, une paroi du canal (206) présentant un profil en gradin définissant une profondeur incrémentale variable d'une cavité (212) à l'autre selon une direction circonférentielle du canal (206).

2. Dispositif (200) selon la revendication précédente, dans lequel le canal (206) a une forme générale annulaire autour de l'axe (X) définissant un trajet d'écoulement circulaire entre les orifices d'entrée (202) et de sortie (204) ou bien le canal (206) s'enroule au moins partiellement selon une configuration en spirale se développant vers l'extérieur entre l'orifice d'entrée (202) et l'orifice de sortie (204).

3. Dispositif (200) selon l'une quelconque des revendications précédentes, dans lequel le canal (206) est pourvu d'une structure géométrique interne (207) s'étendant à l'intérieur du canal (206) selon une direction circonférentielle, configurée pour délimiter la pluralité de cavités (212) et laisser libre de parcours un passage principal d'écoulement du flux gazeux à l'intérieur duquel les cavités (212) débouchent.

4. Dispositif (200) selon la revendication précédente, dans lequel la structure géométrique interne (207) comprend une pluralité de cloisons (214) de séparation radiale délimitant avec des parois du canal (207) une pluralité de compartiments formant la pluralité de cavités (212).

5. Dispositif (200) selon l'une quelconque des revendications précédentes, dans lequel la profondeur d'une cavité (212) à l'autre (212) varie de façon croissante ou décroissante sur la série des résonateurs (210) dans le sens allant de l'entrée (202) vers la sortie (204).

6. Dispositif (200) selon l'une quelconque des revendications précédentes, dans lequel au moins des premier et deuxième résonateurs (210) ayant des première et deuxième fréquences de résonance associées respectivement à des première et deuxième bandes fréquentielles d'atténuation supérieure à vingt décibels, la distance circonférentielle entre les deux résonateurs (210) est déterminée pour produire un phénomène de couplage des deux résonateurs (210) sur une bande continue fréquentielle d'atténuation supérieure à vingt décibels.

7. Dispositif (200) selon l'une quelconque des revendications précédentes, dans lequel un pas optimal Popt(i) entre deux résonateurs (210) consécutifs Ai et Ai+1 étant donné par la formule suivante :

$$\text{Popt(i)} = \frac{v}{8} \times \left(\frac{1}{f0_i} + \frac{1}{f0_{i+1}}\right)$$

dans laquelle f0(i) est la fréquence de résonance du résonateur Ai, fo(i+1) est la fréquence de résonance du résonateur Ai+1 et v la vitesse du son, le pas P(i) entre deux résonateurs (210) consécutifs Ai et Ai+1 est compris dans une plage de valeurs allant de 50% à 150 % de la valeur de Popt(i).

8. Dispositif (200) selon l'une quelconque des revendications précédentes, dans lequel le pas (P) entre deux résonateurs (210) varie de façon croissante ou décroissante le long de la série des résonateurs (210) dans le sens allant de l'entrée (202) vers la sortie (204).

9. Dispositif (200) selon la revendication 7, dans lequel le pas (P) entre deux résonateurs consécutifs Ai et Ai+1 est constant le long de la série d'un nombre N de résonateurs (210) et correspond à la valeur moyenne des valeurs minimale et maximale du pas optimal Popt(i) sur la série des résonateurs Ai avec i allant de 1 à N.

10. Dispositif (200) selon l'une quelconque des revendications précédentes, dans lequel les résonateurs (210) sont tous dimensionnellement différents deux à deux afin d'assurer une absorption à une fréquence de résonance différente.

11. Dispositif (200) selon l'une quelconque des revendications précédentes, dans lequel la cavité (212) de chaque résonateur (210) a une forme tubulaire configurée pour déboucher à l'intérieur du canal (206) et a une profondeur correspondant sensiblement à un quart de la longueur d'onde de l'onde acoustique de fréquence de résonance prédéfinie (f0).

12. Dispositif (200) selon la revendication précédente, dans lequel la section transversale de chaque cavité (212) de résonateur (210) présente des bords curvilignes suivant des courbures intérieure et extérieure du canal (206).

13. Dispositif (200) selon l'une quelconque des revendications précédentes, dans lequel le canal (206) est délimité radialement par des parois périphériques extérieure (220E) et intérieure (220I) annulaires autour de l'axe (X), et transversalement par des parois supérieure (222) et inférieure (224).

14. Dispositif (200) selon la revendication précédente, dans lequel la paroi supérieure (222) est configurée pour délimiter axialement la profondeur des cavités (212) de résonance formant les résonateurs (210).

15. Pompe centrifuge (150), comprenant un carter (170), un arbre (152) s'étendant selon un axe principal (X) de la pompe, une roue (154) montée sur l'arbre (152), un moteur (156) d'entraînement en rotation de la roue (154), définissant un trajet d'écoulement d'un flux gazeux à l'intérieur du carter (170) de la pompe (150) entre un orifice d'admission (176) et un orifice de refoulement (178) du flux gazeux, **caractérisé en ce qu'**il comprend un dispositif d'atténuation acoustique (200) selon l'une quelconque des revendications précédentes, le canal d'atténuation acoustique (206) étant disposé selon une configuration curviligne autour de l'axe principal (X) de la pompe (150) à l'intérieur du carter (170) de telle sorte que le flux gazeux circulant dans la pompe (150) s'écoule au travers dudit canal d'atténuation (206) avant son refoulement dans l'atmosphère par l'orifice de refoulement (178) du carter aval (174).

16. Pompe centrifuge (150) selon la revendication précédente, dans lequel le carter (170) comprend un carter amont (172) configuré pour loger la roue (154) et un carter aval (174) configuré pour loger le moteur (156), le carter aval (174) comprenant un corps en forme générale de capot délimitant une paroi périphérique extérieure (194) et une paroi périphérique intérieure (196) s'étendant autour d'un espace central (198) de logement du moteur (156), le canal (206) du dispositif d'atténuation (200) s'étendant entre les deux parois extérieure (194) et intérieure (196) du carter aval (174).

17. Dispositif (110) dépolluant de récupération de particules de poussière de freinage, en particulier produites par une ou des plaquettes d'un agencement (30) de frein d'un véhicule automobile (10), le dispositif (110) comprenant un boîtier (112) avec un orifice d'entrée (116) pour un flux d'air sale chargé en particules et un orifice de sortie (130) pour l'évacuation d'un flux d'air purifié, et au moins un organe (140 ; 142, 144) de séparation, logé dans le boîtier (112), pour séparer des particules du flux d'air sale, au travers duquel le flux d'air circule entre les orifices d'entrée (116) et de sortie (130), **caractérisé en ce que** le dispositif (110) comprend un organe d'aspiration (150) comprenant une pompe centrifuge selon l'une quelconque des revendications 15 et 16 et **en ce que** l'orifice (172) d'admission de la pompe (150) est configuré pour être raccordé à l'orifice de sortie (130) du boîtier (112).

**Patentansprüche**

1. Schalldämpfungsvorrichtung (200) für eine elektromechanische Vorrichtung (150), die von einem Gasstrom durchströmt wird, der Schallwellen ausbreiten kann, umfassend Einlassöffnungen (202) und Auslassöffnungen (204) für einen Gasstrom, insbesondere zur Ableitung in die Atmosphäre,
**dadurch gekennzeichnet, dass** die Vorrichtung (200) einen Kanal (206) mit einer im Wesentlichen gekrümmten Form um eine Hauptachse (X) der Vorrichtung (200) umfasst, der einen gekrümmten Strömungsweg des Gasstroms zwischen den Einlassöffnungen (202) und den Auslassöffnungen (204) definiert, und eine Vielzahl von Schalldämpfungselementen (210) umfasst, die auf eine Dämpfungsresonanzfrequenz (f0) abgestimmt sind und nacheinander in Reihe entlang des Kanals (206) angeordnet sind, so dass sie mit dem im Kanal (206) strömenden Gasstrom in Wechselwirkung stehen, wobei die schalldämpfenden Elemente (210) durch Viertelwellenresonatorhohlräume (212) gebildet werden und als Resonatoren bezeichnet werden, wobei eine Wand des Kanals (206) ein stufenförmiges Profil aufweist, das eine von einem Hohlraum (212) zum anderen in Umfangsrichtung des Kanals (206) variable inkrementelle Tiefe definiert (206).

2. Vorrichtung (200) nach dem vorhergehenden Anspruch, wobei der Kanal (206) eine im Wesentlichen ringförmige Form um die Achse (X) aufweist, die einen kreisförmigen Strömungsweg zwischen den Einlassöffnungen (202) und den Auslassöffnungen (204) definiert, oder wobei sich der Kanal (206) wenigstens teilweise in einer spiralförmigen Konfiguration nach außen zwischen der Einlassöffnung (202) und der Auslassöffnung (204) windet.

3. Vorrichtung (200) nach einem der vorhergehenden Ansprüche, wobei der Kanal (206) mit einer inneren geometrischen Struktur (207) versehen ist, die sich innerhalb des Kanals (206) in Umfangsrichtung erstreckt und dazu ausgebildet ist, die Mehrzahl von Hohlräumen (212) zu begrenzen und einen Hauptdurchgang für den Gasstrom frei zu lassen, in den die Hohlräume (212) münden.

4. Vorrichtung (200) nach dem vorhergehenden Anspruch, wobei die innere geometrische Struktur (207) eine Mehrzahl von radialen Trennwänden (214) umfasst, die mit den Wänden des Kanals (207) mehrere Kammern begrenzen, die die Mehrzahl von Hohlräumen (212) bilden.

5. Vorrichtung nach einem der vorhergehenden Ansprüche, wobei die Tiefe von einer Höhle (212) zur anderen (212) über die Reihe der Resonatoren (210) in Richtung vom Einlass (202) zum Auslass (204) zunimmt oder abnimmt.

6. Vorrichtung (200) nach einem der vorhergehenden Ansprüche, wobei wenigstens der erste und der zweite Resonator (210) erste und zweite Resonanzfrequenzen aufweisen, die jeweils ersten und zweiten Frequenzbändern mit einer Dämpfung von mehr als zwanzig Dezibel zugeordnet sind, wobei der Umfangsabstand zwischen den beiden Resonatoren (210) so bestimmt ist, dass ein Kopplungsphänomen der beiden Resonatoren (210) über ein kontinuierliches Frequenzband mit einer Dämpfung von mehr als zwanzig Dezibel erzeugt wird.

7. Vorrichtung (200) nach einem der vorhergehenden Ansprüche, wobei ein optimaler Abstand Popt(i) zwischen zwei aufeinanderfolgenden Resonatoren (210) Ai und Ai+1 durch die folgende Formel gegeben ist:

$$\text{Popt(i)} = \frac{v}{8} \times \left(\frac{1}{f0_i} + \frac{1}{f0_{i+1}}\right)$$

wobei f0(i) die Resonanzfrequenz des Resonators Ai ist, fo(i+1) die Resonanzfrequenz des Resonators Ai+1 ist, v die Schallgeschwindigkeit ist und der Abstand P(i) zwischen zwei aufeinanderfolgenden Resonatoren (210) Ai und Ai+1 in einem Wertebereich von 50 % bis 150 % des Wertes von Popt(i) liegt.

8. Vorrichtung (200) nach einem der vorhergehenden Ansprüche, wobei der Abstand (P) zwischen zwei Resonatoren (210) entlang der Reihe von Resonatoren (210) in Richtung vom Einlass (202) zum Auslass (204) ansteigend oder abfallend variiert.

9. Vorrichtung (200) nach Anspruch 7, wobei der Abstand (P) zwischen zwei aufeinanderfolgenden Resonatoren Ai und Ai+1 entlang der Reihe einer Anzahl N von Resonatoren (210) konstant ist und dem Mittelwert der minimalen und maximalen Werte des optimalen Abstands Popt(i) über die Reihe der Resonatoren Ai mit i von 1 bis N entspricht.

10. Vorrichtung (200) nach einem der vorhergehenden Ansprüche, wobei die Resonatoren (210) alle paarweise unterschiedlich dimensioniert sind, um eine Absorption bei unterschiedlichen Resonanzfrequenzen zu gewährleisten.

11. Vorrichtung (200) nach einem der vorhergehenden Ansprüche, wobei der Hohlraum (212) jedes Resonators (210) eine röhrenförmige Form aufweist, die dazu ausgebildet ist, in dem Kanal (206) zu münden, und eine Tiefe aufweist, die im Wesentlichen einem Viertel der Wellenlänge der Schallwelle mit der vordefinierten Resonanzfrequenz (f0) entspricht.

12. Vorrichtung (200) nach dem vorhergehenden Anspruch, wobei der Querschnitt jedes Resonatorhohlraums (212) gekrümmte Ränder aufweist, die den Innen- und Außenkrümmungen des Kanals (206) folgen.

13. Vorrichtung (200) nach einem der vorhergehenden Ansprüche, wobei der Kanal (206) radial durch äußere (220E) und innere (2201) ringförmige Umfangswände um die Achse (X) und quer durch obere (222) und untere Wände (224) begrenzt ist.

14. Vorrichtung (200) nach einem der vorhergehenden Ansprüche, wobei die obere Wand (222) dazu ausgebildet ist, die Tiefe der Resonanzhohlräume (212), die die Resonatoren (210) bilden, axial zu begrenzen.

15. Zentrifugalpumpe (150), umfassend ein Gehäuse (170), eine sich entlang einer Hauptachse (X) der Pumpe erstreckende Welle (152), ein an der Welle (152) montiertes Laufrad (154), einen Motor (156) zum Antreiben der Drehung des Laufrads (154), der einen Strömungsweg eines Gasstroms innerhalb des Gehäuses (170) der Pumpe (150) zwischen einer Einlassöffnung (176) und einer Auslassöffnung (178) des Gasstroms definiert,
**dadurch gekennzeichnet, dass** sie eine Schalldämpfungsvorrichtung (200) nach einem der vorhergehenden Ansprüche umfasst, wobei der Schalldämpfungskanal (206) in einer kurvenförmigen Konfiguration um die Hauptachse (X) der Pumpe (150) herum innerhalb des Gehäuses (170) angeordnet ist, so dass der in der Pumpe (150) strömende Gasstrom durch den Schalldämpfungskanal (206) strömt bevor er durch die Auslassöffnung (178) des stromabwärtigen Gehäuses (174) in die Atmosphäre ausgestoßen wird.

16. Zentrifugalpumpe (150) nach dem vorhergehenden Anspruch, wobei das Gehäuse (170) ein zur Aufnahme des Laufrads (154) ausgebildetes stromaufwärtiges Gehäuse (172) und ein zur Aufnahme des Motors (156) ausgebildetes stromabwärtiges Gehäuse (174) umfasst, wobei das stromabwärtige Gehäuse (174) einen im Allgemeinen haubenförmigen Körper umfasst, der eine äußere Umfangswand (194) und eine innere Umfangswand (196) begrenzt, die sich um einen zentralen Raum (198) zur Aufnahme des Motors (156) erstrecken, wobei sich der Kanal (206) der Schalldämpfungsvorrichtung (200) zwischen der Außenwand (194) und der Innenwand (196) des stromabwärtigen Gehäuses (174) erstreckt.

17. Reinigungsvorrichtung (110) zur Gewinnung von Bremsstaubpartikeln, insbesondere von einem oder mehreren Bremsbelägen einer Bremsanordnung (30) eines Kraftfahrzeugs (10), wobei die Vorrichtung (110) ein Gehäuse (112) mit einer Einlassöffnung (116) für einen mit Partikeln beladenen schmutzigen Luftstrom und einer Auslassöffnung (130) zum Abführen eines gereinigten Luftstroms und wenigstens ein in dem Gehäuse (112) aufgenommenes Trennelement (140; 142, 144) umfasst, um Partikel aus dem schmutzigen Luftstrom abzuscheiden, durch das der Luftstrom zwischen der Einlassöffnung (116) und der Auslassöffnung (130) strömt, **dadurch gekennzeichnet, dass** die Vorrichtung (110) ein Ansaugelement (150) mit einer Zentrifugalpumpe nach einem der Ansprüche 15 und 16 umfasst, und dass die Einlassöffnung (172) der Pumpe (150) dazu ausgebildet ist, mit der Auslassöffnung (130) des Gehäuses (112) verbunden zu werden.

**Claims**

1. Acoustic attenuation device (200) for an electromechanical device (150) through which passes a gas stream capable of propagating acoustic waves, comprising inlet (202) and outlet (204) ports for a gas stream, in particular for the purpose of release into the atmosphere, **characterized in that** the device (200) comprises a channel (206) of an overall shape that is generally curvilinear around a main axis (X) of the device (200), defining a substantially curvilinear flow path for the gas stream between the inlet (202) and outlet (204) ports, and comprises a plurality of acoustic attenuator elements (210) tuned to an attenuation resonance frequency (f0), arranged consecutively in series along said channel (206) so as to interact with the gas stream flowing in the channel (206), the acoustic attenuator elements (210) being formed by cavities (212) of quarter-wave resonators and being referred to as resonators, a wall of the channel (206) having a stepped profile defining an incremental depth which varies from one cavity (212) to another along a circumferential direction of the channel (206).

2. Device (200) according to the preceding claim, wherein the channel (206) has an overall shape that is generally annular around the axis (X), defining a near-circular flow path between the inlet (202) and outlet (204) ports, or the channel (206) at least partially winds in an outwardly expanding spiral configuration between the inlet port (202) and the outlet port (204).

3. Device (200) according to any one of the preceding claims, wherein the channel (206) is provided with an internal geometric structure (207) extending inside the channel (206) in a substantially circumferential direction, configured to define the plurality of cavities (212) and to leave free of obstructions to the flow of the gas stream a main passage which the cavities (212) are open to.

4. Device (200) according to any one of the preceding claims, wherein the internal geometric structure (207) comprises a plurality of radial separation partitions (214) which define, with the walls of the channel (207), a plurality of compartments forming the plurality of cavities (212).

5. Device (200) according to any one of the preceding claims, wherein the depth from one cavity (212) to another (212) varies increasingly or decreasingly over the series of resonators (210), in the direction going from the inlet (202) to the outlet (204).

6. Device (200) according to any one of the preceding claims, wherein at least first and second resonators (210) having first and second resonance frequencies respectively associated with first and second frequency bands of attenuation greater than twenty decibels, the circumferential distance between the two resonators (210) is determined so as to produce a coupling phenomenon between the two resonators (210) over a continuous frequency band of attenuation greater than twenty decibels.

7. Device (200) according to any one of the preceding claims, wherein an optimal spacing Popt(i) between two consecutive resonators (210) Ai and Ai+1 being given by the following formula:

$$\mathrm{Popt(i)} = \frac{v}{8} \times (\frac{1}{f0_i} + \frac{1}{f0_{i+1}})$$

where f0(i) is the resonance frequency of resonator Ai, f0(i+1) is the resonance frequency of resonator Ai+1, and v is the speed of sound, the spacing P(i) between two consecutive resonators (210) Ai and Ai+1 is within a range of values extending from 50% to 150% of the value of Popt(i).

8. Device (200) according to any one of the preceding claims, wherein the spacing (P) between two resonators (210) varies increasingly or decreasingly along the series of resonators (210), in the direction going from the inlet (202) to the outlet (204).

9. Device (200) according to claim 7, wherein the spacing (P) between two consecutive resonators Ai and Ai+1 is constant along the series of a number N of resonators (210) and corresponds to the mean value of the minimum and maximum values of the optimal spacing Popt(i) over the series of resonators Ai, with i from 1 to N.

10. Device (200) according to any one of the preceding claims, wherein the resonators (210) are all dimensionally different when compared pairwise, so as to ensure an absorption at a different resonance frequency.

11. Device (200) according to any one of the preceding claims, wherein the cavity (212) of each resonator (210) has a substantially tubular shape configured to be open to the channel (206) and has a depth corresponding substantially to a quarter of the wavelength of the acoustic wave of predefined resonance frequency (f0).

12. Device (200) according to the preceding claim, wherein the cross-section of each resonator (210) cavity (212) has curvilinear edges which follow interior and exterior curvatures of the channel (206).

13. Device (200) according to any one of the preceding claims, wherein the channel (206) is defined radially by outer (220E) and inner (220I) peripheral walls which are annular around the axis (X), and transversely by upper (222) and lower (224) walls.

14. Device (200) according to the preceding claim, wherein the upper wall (222) is configured to axially define the depth of the resonance cavities (212) forming the resonators (210).

15. Centrifugal pump (150), comprising a casing (170), a shaft (152) extending along a main axis (X) of the pump, an impeller (154) mounted on the shaft (152), a motor (156) for rotating the impeller (154), defining a flow path for a gas stream inside the casing (170) of the pump (150) between an intake port (176) and a discharge port (178) for the gas stream, **characterized in that** it comprises an acoustic attenuation device (200) according to any one of the preceding claims, the acoustic attenuation channel (206) being arranged in a curvilinear configuration around the main axis (X) of the pump (150) inside the casing (170) so that the gas stream circulating in the pump (150) flows through said attenuation channel (206) before it is discharged into the atmosphere through the discharge port (178) of the downstream casing (174).

16. Centrifugal pump (150) according to the preceding claim, wherein the casing (170) comprises an upstream casing (172) configured to house the impeller (154) and a downstream casing (174) configured to house the motor (156), the downstream casing (174) comprising a body in the general shape of a cowling defining an outer peripheral wall (194) and an inner peripheral wall (196) extending around a central space (198) for housing the motor (156), the channel (206) of the attenuation device (200) extending between the two outer (194) and inner (196) walls of the downstream casing (174).

17. Pollution-removing device (110) for recovering brake dust particles, in particular those produced by one or more pads of a brake arrangement (30) of a motor vehicle (10), the device (110) comprising a housing (112) with an inlet port (116) for a flow of dirty air laden with particles and an outlet port (130) for the discharging a flow of purified air, and at least one separation member (140; 142, 144), housed in the housing (112), through which the air flow circulates between the inlet (116) and outlet (130) ports in order to separate particles from the flow of dirty air, **characterized in that** the device (110) comprises a suction member (150) comprising a centrifugal pump according to any one of claims 15 and 16 and **in that** the intake port (172) of the pump (150) is configured to be connected to the outlet port (130) of the housing (112).

[Fig 1]

Fig. 1

[Fig 2]

Fig. 2

[Fig 3]

Fig. 3

[Fig 4]

Fig.4

[Fig 5]

Fig.5

[Fig 6]

Fig.6

[Fig 7]

*Fig.7*

[Fig 8]

Fig. 8

[Fig 9]

Fig. 9

EP 4 320 613 B1

[Fig 10]

Fig. 10

[Fig 11]

Fig. 11

[Fig 12]

*Fig.12*

[Fig 13]

*Fig.13*

[Fig 14]

*Fig.14*

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3144913 A

- CN 1864619 A